# EUROPEAN PATENT SPECIFICATION

(11) **EP 0 955 195 B1**
(45) Date of publication and mention of the grant of the patent: **30.07.2003**
(21) Application number: 99201366.4
(22) Date of filing: 03.05.1999
(51) Int. Cl.: B60J 7/05

(54) **Open roof construction for a vehicle**
Konstruktion für ein öffnungsfähiges Fahrzeugdach
Construction de toit ouvrant pour véhicule

(30) Priority: 06.05.1998 NL 1009072
(43) Date of publication of application: 10.11.1999
(73) Proprietor: Inalfa Industries B.V., 5804 AB Venray (NL)
(72) Inventor: Nabuurs, Martinus Wilhelmus Maria, 5825 JT Overloon (NL); Manders, Peter Christiaan Leonardus Johannes, 5961 SM Horst (NL); Boersma, Egbert, 5706 CR Helmond (NL)
(74) Representative: Metman, Karel Johannes

(56) References cited:
- DE-A- 3 417 098
- DE-A- 4 405 583
- US-A- 4 350 385

## Description

The invention relates to an open roof construction for a vehicle according to the preamble of claim 1.

With a known version of such an open roof construction (US-A-4,350,385), the access opening is bounded by a plate which is slidably adjustable by urging it with a screwdriver and which is then fixed by tightening a screw.

The object of the present invention is to further improve the open roof construction as referred to in the introduction.

In order to accomplish that objective, the open roof construction according to the invention is characterized by the features of the characterizing portion of claim 1.

It is advantageous that said adjustment is carried out by means of a rotatable operating element, because this may lead to a precisely controllable adjustment. The self-braking action of the operating element is also advantageous because a separate mounting element is not needed for locking the adjustable element in position. The operating element simultaneously functions to operate and to lock the adjustable element.

Preferably, the part of the stationary part which bounds said access opening is an adjustable element which is adjustable by said operating element. The adjustable element is preferably adjustable in a direction parallel to the locking groove.

This adjusting possibility for fixing an adjustable element to the stationary part of the open roof construction may lead to a construction which is easier to operate and which operates more accurately.

The adjusting element can thereby enable continuously variable adjustment or adjustment in small steps.

The invention will be explained in more detail hereafter with reference to the drawings, which show an embodiment of the open roof construction according to the invention.
Figs. 1, 2 and 3 are longitudinal sectional views of the open roof construction according to the invention, showing the panel in its closed position, in a position in which it has been moved practically completely downwards and in a position in which it has been moved slightly rearwards.
Fig. 4 is a perspective view on a much larger scale of a part of the stationary guide rail according to arrow IV in Fig. 1, seen in mirror image.
Figs. 5 and 6 are perspective views of, respectively, the adjustable element and the operating element thereof as shown in Fig. 4.

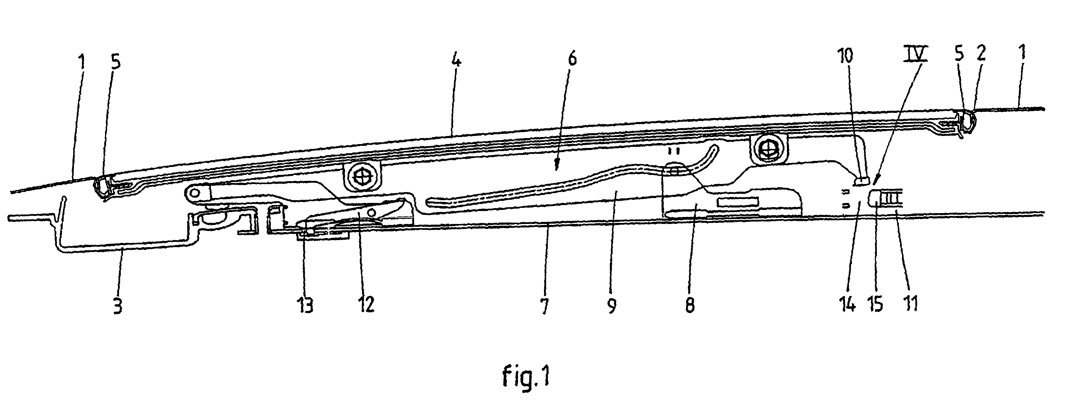

The drawings, and in the first instance Figs. 1 - 3 thereof, show a fixed roof 1 of a vehicle, in particular a motor vehicle such as a passenger car, in which a roof opening 2 is provided or recessed for the purpose of accommodating an open roof construction. Said open roof construction comprises a frame 3 or other stationary part for fixing the open roof construction to the fixed roof 1.

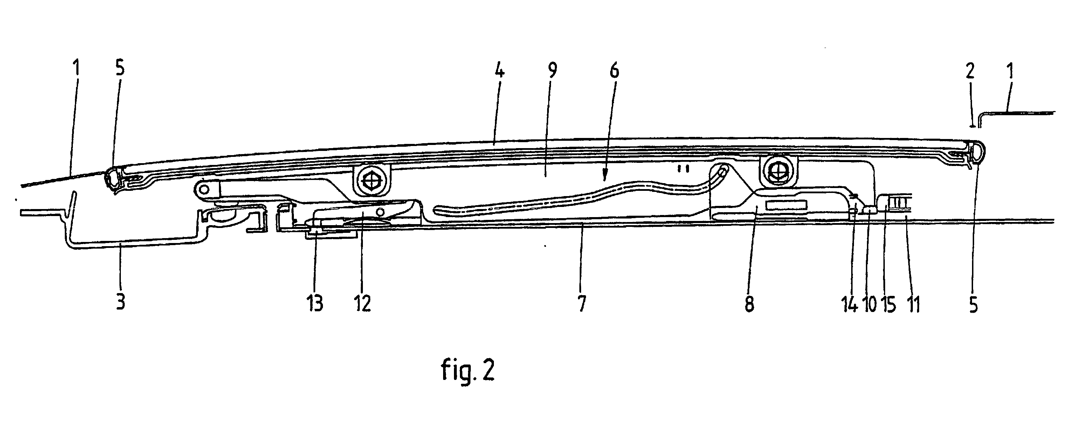

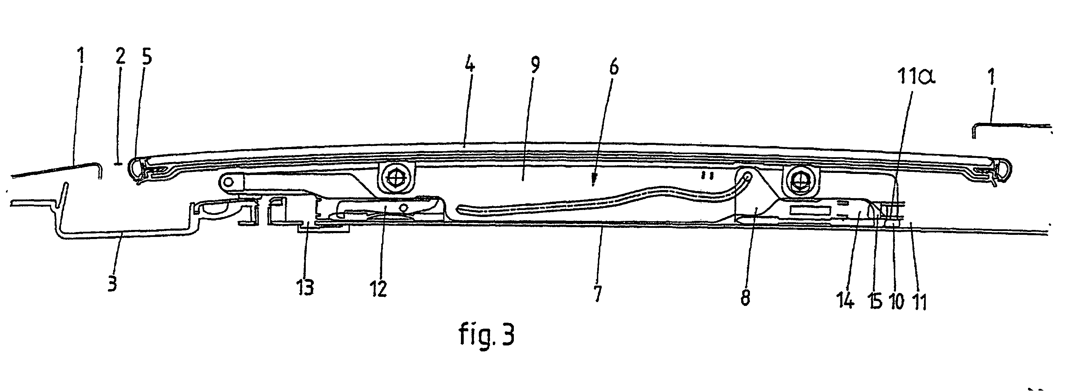

Frame 3 adjustably supports, in a manner yet to be described in more detail, a closing element, in this case in the form of a rigid, preferably transparent panel 4, which closes the roof opening 2 in fixed roof 1 in the closed position which is shown in Fig. 1, in particular by means of a circumferential seal 5. The drawing does not show that panel 4 can be pivoted upwards from the closed position to a rearwardly sloping ventilating position. Figs. 2 and 3 do show, however, that panel 4 can be moved down from the closed position on the rear side and subsequently be moved rearwards to an open position entirely or partially under fixed roof 1. It is noted that the invention can also be used with open roof constructions comprising different closing elements and closing elements which are capable of making other movements.

Panel 4 is provided on both long sides with an adjusting mechanism 6 for the purpose of adjusting said panel. Said adjusting mechanism comprises parts which are accommodated between panel 4 and stationary guide rails 7, which are mounted on the longitudinal edges and, in line therewith in rearward direction, on or in frame 3. A large part of the adjusting mechanism 6 is already known and will not be described in more detail herein. Driving means are provided for operating adjusting mechanism 6, which driving means are in the form of pull-push cables (not shown), which can be moved by means of an electric motor, a crank or the like for adjusting the parts of the adjusting mechanisms 6.

As already mentioned before, panel 4 can make two separate movements, wherein the pivoting movement to the ventilating position and to the downwardly moved position is effected by the relative movement between a driving slide 8 of adjusting mechanism 6 and a link 9 of panel 4, whilst driving slide 8 and link 9 and panel 4 are moved as one unit upon horizontal sliding movement of panel 4. Panel 4 must be prevented from moving in horizontal direction upon pivoting, whilst panel 4 must be locked in vertical direction while making its sliding movement. Locking elements are provided for this purpose, with a first locking element 10 on link 9 present near the rear side of panel 4 mating with a horizontal locking groove 11 in stationary guide rail 7 for locking panel 4 in vertical direction, as well as a second locking element 12 in the form of a rocker arm, which is capable of engaging with a nose in a locking recess 13 in the bottom of guide rail 7.

For a satisfactory operation of adjusting mechanism 6 it is important that locking elements 10 and 12 take over the locking function at the right moment, that is, that the first locking element 10 must enter locking groove 11 via an access opening 14 exactly at the moment when the nose of the second locking element 12 exits locking recess 13. This take-over point may vary due to production tolerances, as a result of which adjusting mechanism 6 may malfunction.

It is an object of the invention to overcome this problem by providing an adjustable element for one of the locking elements, and in the illustrated embodiment an adjustable element 15 is provided in the form of a movable element which defines the access opening 14 and an adjacent portion of locking groove 11, by means of which movable element the starting point of locking groove 11 can be adjusted and be adapted to tolerances in the horizontal position of locking element 10 on panel 4.

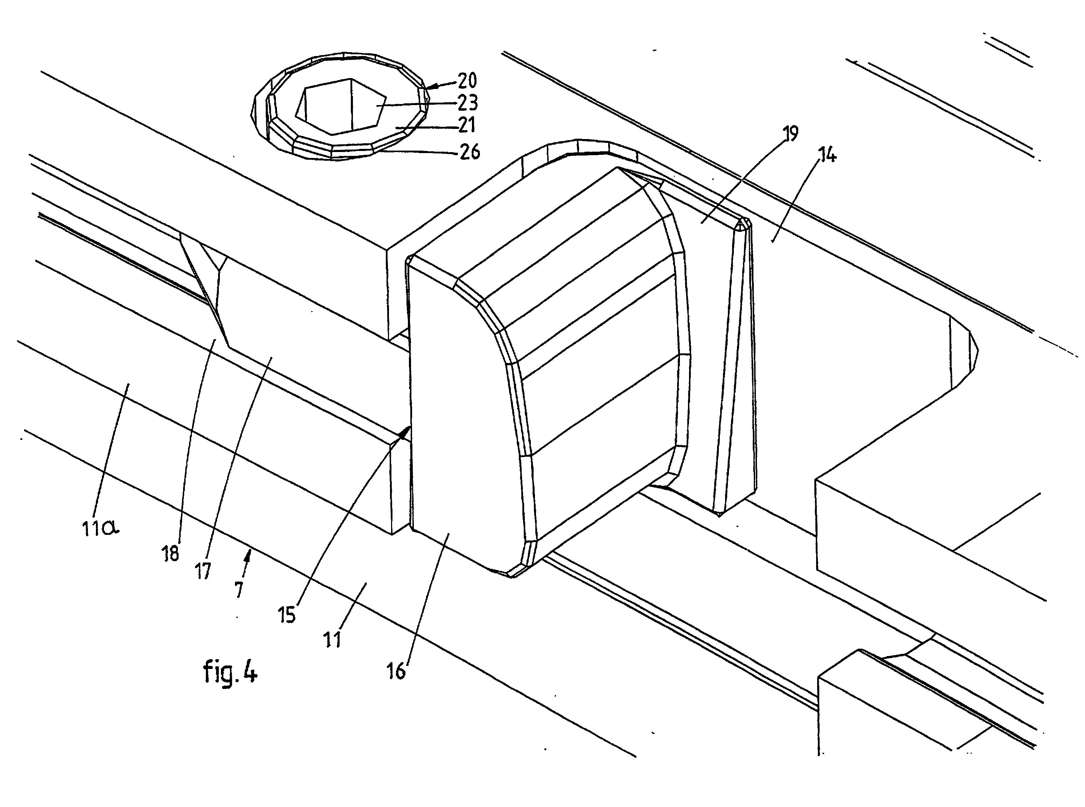

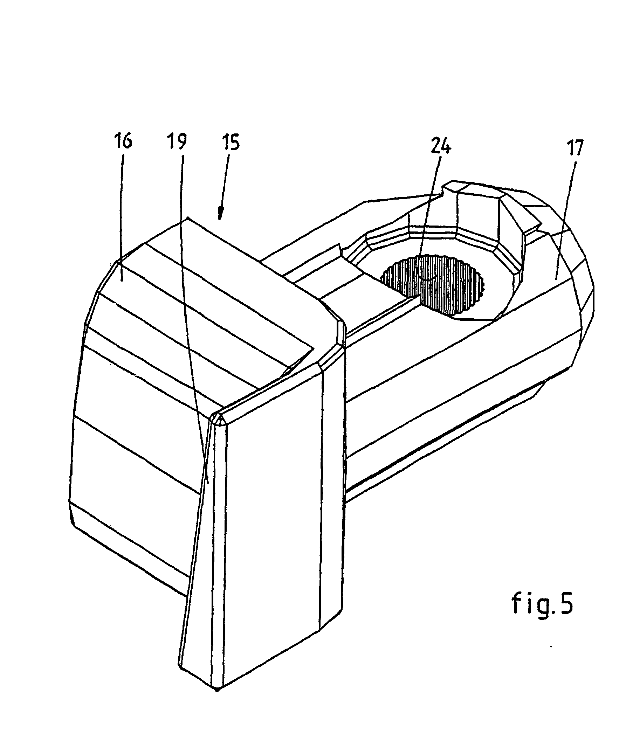

Fig. 4 is larger-scale view of a part of the stationary guide rail 7 comprising the locking groove 11, the access opening for said groove and the adjustable element 15 thereof. As is also shown in Fig. 5, the adjustable element 15 possesses a head 16, which is positioned in a recess in guide rail 7 forming the access opening 14, and a guide portion 17 which is inserted in a horizontal guide groove 18 in guide rail 7 for guiding movement of head 16 of adjustable element 15 in a direction parallel to guide rail 7. The surface of head 16 of adjustable element 15 that is directed towards access opening 14 is shaped to precisely accommodate the movement of locking element 10. Said locking element is in the form of a part extending laterally from link 9 or a hook or the like, which can extend into locking groove 11 from one side, thus preventing vertical movement of panel 4 at that location, since said groove 11 is bounded on the upper side by a flange 11a, under which the part of the locking element 10 engages.

Adjustable element 15 furthermore comprises a lateral guide portion 19 having a slightly inwardly sloping guide face for possibly moving locking element 10 in lateral direction so as to enable it to enter guide groove 11 correctly and guiding the downwardly extending part of link 9 along the parts that form guide groove 11.

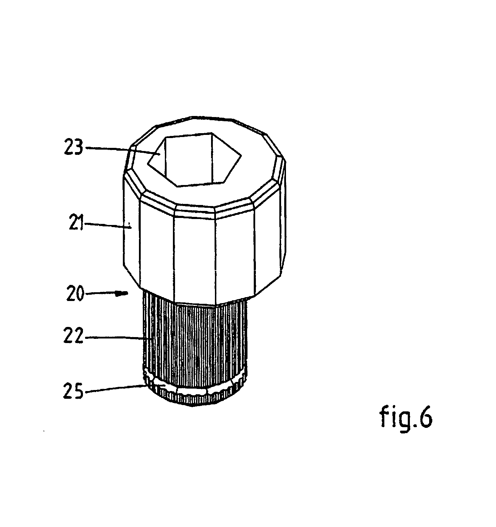

The adjustment or movement of adjustable element 15 can be effected by means of an operating element 20, which is shown separately in Fig. 6. Operating element 20 is provided with a head 21 and a shank or pin 22. Head 21 is provided with a hexagonal socket 23 or other tool engaging element. Said hexagonal socket is concentric with pin 22. Head 21, on the other hand, is formed eccentrically relative to pin 22 and to hexagonal socket 23, as is clearly shown in the Figures. Figs. 5 and 6 furthermore show that the outer circumference of pin 22 and the inner circumference of a hole 24 formed in guide portion 17 of adjustable element 15 are provided with very fine teeth, which mate in such a manner that operating element 20 is locked against rotation relative to adjustable element 15, but that on the other hand operating element 20 can be rotated in steps by exerting some force, using a tool which is inserted in hexagonal socket 23. Operating element 20 is thus self-braking with respect to adjustable element 15. A horizontal circumferential groove 25 in pin 22 may be used for locking operating element 20 in position in vertical direction when a projection (not shown) present in the hole of guide portion 17 engages in circumferential groove 25 of adjustable element 15.

As is shown in Fig. 4, a slotted hole or opening 26 is formed in a horizontal flange of stationary guide rail 7, which hole or opening is oval, with a short axis extending in the longitudinal direction of guide rail 7, whose length is equal to the diameter of head 21 of operating element 20, and a long axis extending transversely to the longitudinal direction of guide rail 7, whose length is equal to the diameter of head 21 plus the eccentricity of head 21 relative to pin 22 of operating element 20. As a result of this shape of opening 26, rotation of operating element 20 also results in movement of head 21 in transverse direction and movement of pin 22 in the longitudinal direction of guide rail 7, thus causing adjustable element 15 to move in the longitudinal direction of guide rail 7. As soon as the correct position of adjustable element 15 has been reached, the tool can be removed from the hexagonal socket 23 and no further operation is required for locking the adjustable element 15 in the adjusted position, since operating element 20 both adjusts the adjustable element and locks it in position.

From the foregoing it will be apparent that the invention provides an open roof construction whose adjusting mechanism operates very reliably, due to a precise adjustment and gearing of one or more locking elements. The adjustment of the locking element can be carried out in an easy and accurate manner.

The invention is not limited to the above-described embodiment as shown in the drawing, which can be varied in several ways within the scope of the inventions, as defined by the appended claims. Thus, it would also be possible to combine the self-braking adjustable element with the locking element on the closing element.

## Claims

1. An open roof construction for a vehicle having an opening (2) in its fixed roof (1), which open roof construction comprises a stationary part (3) to be fixed to the roof, an adjustable closing element (4) supported by said stationary part, which is adjustable between a closed position, in which it closes the roof opening, and an open position, in which it releases the roof opening, at least partially so, as well as a locking element (10) coupled to said closing element, which mates with a locking groove (11) comprising an access opening (14) in said stationary part, wherein said locking element (10) and that part of the stationary part which bounds said access opening (14) are adjustable relative to each other, **characterized by** a rotatably mounted operating element (20) for said adjustment, and said operating element (20) being self-braking.

2. An open roof construction according to claim 1, wherein the part of the stationary part which bounds said access opening (14) is an adjustable element (15) which is adjustable by said operating element (20).

3. An open roof construction according to claim 2, wherein the adjustable element (15) is adjustable in a direction parallel to the locking groove (11).

4. An open roof construction according to one of the preceding claims, wherein the rotatable operating element (20) comprises an eccentric.

5. An open roof construction according to claim 4, wherein the operating element (20) is provided with a pin (22) and a head (21) disposed eccentrically with respect thereto, wherein said pin (22) is rotatably in engagement with said adjustable element (15) and wherein said head (21) is rotatably in engagement with said stationary part (3), whilst a provision has been made for accommodating the relative movement between said head (21) and said pin (22) in a direction transversely to the direction of movement of the adjustable element (15).

6. An open roof construction according to claim 5, wherein said provision consists of a slotted hole (26) formed in said stationary part (3) for accommodating the head (21) of the operating element (20) with some play in transverse direction.

7. An open roof construction according to any one of the preceding claims, wherein the pin (22) of the operating element (20) is accommodated in a hole (24) in the adjustable element (15) in a self-braking manner.

8. An open roof construction according to any one of the preceding claims, wherein the surface of the adjustable element (15) that faces towards the access opening (14) is precisely adapted to accommodate the movement of the locking element (10).

9. An open roof construction according to claim 8, wherein the adjustable element (15) is provided, at least on one side, with a guide wall (19) projecting from said surface in the longitudinal direction of the stationary part (3), which guide wall (19) functions to guide the locking element (10) in transverse direction.

10. An open roof construction according to any one of the preceding claims, wherein the closing element (4) and the operating elements (6) for said closing element are arranged for making two different movements, wherein a separate locking element (10, 12) is provided for each movement and wherein said locking elements (10, 12) take over the locking function when a change-over is made from one movement to the other movement.

11. An open roof construction according to claim 10 in the form of a tilting-sliding roof, wherein the closing element comprises a rigid panel (4) which can be adjusted from a closed position in the roof opening, on the one hand to an upwardly pivoted ventilating position and on the other hand to a rearwardly moved position, wherein said locking element (10) is fixed to the panel and mates with a locking groove (11) which is present in guide rails (7) disposed on either side of the roof opening (2), wherein said groove (11) is bounded on the upper side by a flange (11a), under which a part of the locking element (10) engages when said locking element performs its locking function in downwardly and rearwardly moved positions of said panel (4).

## Patentansprüche

1. Offene Dachkonstruktion für ein Fahrzeug mit einer Öffnung (2) in dessen feststehendem Dach (1), welche offene Dachkonstruktion einen stationären Teil (3) aufweist, der an dem Dach zu fixieren ist, ein verstellbares Schließelement (4), das von dem stationären Teil abgestützt wird, welches zwischen einer Schließstellung, in welcher es die Dachöffnung schließt, und einer Öffnungsstellung verstellbar ist, in welcher es die Dachöffnung freilegt, zumindest teilweise so, wie ein Verriegelungselement (10) mit dem Schließelement gekuppelt ist, welches mit einer Verriegelungsnut (11) zusammenpasst, die eine Zugangsöffnung (14) in dem stationären Teil aufweist, wobei das Verriegelungselement (10) und jener Abschnitt des stationären Teils, welcher die Zugangsöffnung (14) bestimmt, relativ zueinander verstellbar sind, **gekennzeichnet durch** ein drehbar montiertes Betätigungselement (20) für die Verstellung, und wobei das Betätigungselement (20) selbsthemmend ist.

2. Offene Dachkonstruktion gemäß Anspruch 1, wobei der Abschnitt des stationären Teils, welcher die Zugangsöffnung (14) bestimmt, ein verstellbares Element (15) ist, welches mittels des Betätigungselements (20) verstellbar ist.

3. Offene Dachkonstruktion gemäß Anspruch 2, wobei das verstellbare Element (15) in einer Richtung parallel zu der Verriegelungsnut (11) verstellbar ist.

4. Offene Dachkonstruktion gemäß einem der vorhergehenden Ansprüche, wobei das drehbare Betätigungselement (20) einen Exzenter aufweist.

5. Offene Dachkonstruktion gemäß Anspruch 4, wobei das Betätigungselement (20) mit einem Bolzen (22) und einem Kopf (21) versehen ist, der bezügliche diesem exzentrisch angeordnet ist, wobei der Bolzen (22) mit dem verstellbaren Element (15) drehbar in Eingriff ist und wobei der Kopf (21) mit dem stationären Teil (3) drehbar in Eingriff ist, während eine Einrichtung zum Anpassen der Relativbewegung zwischen dem Kopf (21) und dem Bolzen (22) in einer Richtung quer zu der Richtung der Bewegung des verstellbaren Elements (15) vorgesehen wurde.

6. Offene Dachkonstruktion gemäß Anspruch 5, wobei die Einrichtung aus einem geschlitzten Loch (26) besteht, das in dem stationären Teil (3) zur Unterbringung des Kopfes (21) des Betätigungselements (20) mit etwas Spiel in Querrichtung ausgebildet ist.

7. Offene Dachkonstruktion gemäß einem der vorhergehenden Ansprüche, wobei der Bolzen (22) des Betätigungselements (20) in einem Loch (24) in dem verstellbaren Element (15) in einer selbsthemmenden Weise untergebracht ist.

8. Offene Dachkonstruktion nach einem der vorhergehenden Ansprüche, wobei die Fläche des verstellbaren Elements (15), die der Zugangsöffnung (14) zugewandt ist, genau angepasst ist, um sich auf die Bewegung des Verriegelungselements (10) einzustellen.

9. Offene Dachkonstruktion gemäß Anspruch 8, wobei das einstellbare Element (15) zumindest an der einen Seite mit einer Führungswand (19) versehen ist, die von der Fläche in der Längsrichtung des stationären Teils (3) vorsteht, welche Führungswand (19) zum Führen des Verriegelungselements (10) in Querrichtung wirkt.

10. Offene Dachkonstruktion gemäß einem der vorhergehenden Ansprüche, wobei das Schließelement (4) und die Betätigungselemente (6) für das Schließelement zum Durchführen zweier unterschiedlicher Bewegungen angeordnet sind, wobei ein separates Verriegelungselement (10, 12) für jede Bewegung vorgesehen ist und wobei die Verriegelungselemente (10, 12) die Verriegelungsfunktion übernehmen, wenn ein Übergang von der einen Bewegung zu der anderen Bewegung durchgeführt wird.

11. Offene Dachkonstruktion gemäß Anspruch 10 in der Form eines Kipp-Schiebedachs, wobei das Schließelement ein starres Paneel (4) aufweist, welches von einer Schließstellung in der Dachöffnung in eine nach oben geschwenkte Ventilationsstellung einerseits und in eine nach hinten bewegte Stellung andererseits verstellt werden kann, wobei das Verriegelungselement (10) an dem Paneel festgelegt ist und mit einer Verriegelungsnut (11) zusammenpasst, welche in Führungsschienen (7) vorliegen, die an jeder Seite der Dachöffnung (2) angeordnet sind, wobei die Nut (11) an der Oberseite von einem Flansch (11a) gebildet wird, unter welchem ein Teil des Verriegelungselements (10) eingreift, wenn das Verriegelungselement seine Verriegelungsfunktion in nach unten und nach hinten bewegter Stellung des Paneels (4) durchführt.

## Revendications

1. Construction de toit ouvrant pour un véhicule comportant une ouverture (2) dans son toit fixe (1) , laquelle construction de toit ouvrant comprend une partie immobile (3) à fixer sur le toit, un élément de fermeture réglable (4) supporté par ladite partie immobile, qui est réglable entre une position fermée, dans laquelle elle ferme l'ouverture du toit, et une position ouverte, dans laquelle elle libère l'ouverture du toit, au moins partiellement, ainsi qu'un élément de verrouillage (10) accouplé audit élément de fermeture, qui correspond à une gorge de verrouillage (11) comprenant une ouverture d'accès (14) dans ladite partie immobile, dans laquelle ledit élément de verrouillage (10) et la portion de la partie immobile qui délimite ladite ouverture d'accès (14) sont réglables l'un par rapport à l'autre, **caractérisée par** un élément opérant (20) monté de façon rotative pour ledit réglage, et ledit élément opérant (20) étant auto-freinant.

2. Construction de toit ouvrant selon la revendication 1, dans laquelle la portion de la partie immobile qui délimite ladite ouverture d'accès (14) est un élément réglable (15) qui est ajustable par ledit élément opérant (20).

3. Construction de toit ouvrant selon la revendication 2, dans laquelle l'élément réglable (15) est réglable dans une direction parallèle à la gorge de verrouillage (11).

4. Construction de toit ouvrant selon l'une quelconque des revendications précédentes, dans laquelle l'élément opérant rotatif (20) comprend un excentrique.

5. Construction de toit ouvrant selon la revendication 4, dans laquelle l'élément opérant (20) est muni d'une broche (22) et d'une tête (21) disposée excentriquement par rapport à celle-ci, dans laquelle ladite broche (22) coopère en rotation avec ledit élément réglable (15) et dans laquelle ladite tête (21) coopère en rotation avec ladite partie immobile (3), tandis qu'une disposition a été prise pour tenir compte du mouvement relatif entre ladite tête (21) et ladite broche (22) dans une direction transversale à la direction de mouvement de l'élément réglable (15).

6. Construction de toit ouvrant selon la revendication 5, dans laquelle ladite disposition consiste en un trou fendu (26), formé dans ladite partie immobile (3) pour recevoir la tête (21) de l'élément opérant (20) avec un certain jeu dans la direction transversale.

7. Construction de toit ouvrant selon l'une quelconque des revendications précédentes, dans laquelle la broche (22) de l'élément opérant (20) est logée dans un trou (24) dans l'élément réglable (15) d'une manière auto-freinante.

8. Construction de toit ouvrant selon l'une quelconque des revendications précédentes, dans laquelle la surface de l'élément réglable (15) qui est en regard de l'ouverture d'accès (14) est adaptée avec précision pour tenir compte du mouvement de l'élément de verrouillage (10).

9. Construction de toit ouvrant selon la revendication 8, dans laquelle l'élément réglable (15) est doté, au moins sur un côté, d'une paroi de guidage (19) faisant saillie à partir de ladite surface dans la direction longitudinale de la partie immobile (3), laquelle paroi de guidage (19) sert à guider l'élément de verrouillage (10) dans la direction transversale.

10. Construction de toit ouvrant selon l'une quelconque des revendications précédentes, dans laquelle l'élément de fermeture (4) et les éléments opérants (6) pour ledit élément de fermeture sont disposés pour effectuer deux mouvements différents, un élément de verrouillage séparé (10,12) étant prévu pour chaque mouvement et lesdits éléments de verrouillage (10,12) reprenant la fonction de verrouillage lorsque se produit une permutation d'un mouvement à l'autre.

11. Construction de toit ouvrant selon la revendication 10 sous la forme d'un toit inclinable - coulissant, dans laquelle l'élément de fermeture comprend un panneau rigide (4) qui peut être ajusté à partir d'une position fermée dans l'ouverture de toit, d'une part sur une position de ventilation pivotée vers le haut et d'autre part sur une position déplacée vers l'arrière, dans laquelle ledit élément de verrouillage (10) est fixé sur le panneau et correspond à une gorge de verrouillage (11) qui est présente dans des glissières de guidage (7) disposées de part et d'autre de l'ouverture du toit (2), dans laquelle ladite gorge (11) est délimitée sur le côté supérieur par une bride (11a), sous laquelle s'engage une partie de l'élément de verrouillage (10) lorsque ledit élément de verrouillage assure sa fonction de verrouillage dans des positions déplacées vers le bas et vers l'arrière dudit panneau (4).
